# EUROPÄISCHE PATENTANMELDUNG

(11) **EP 1 473 134 A2**
(43) Veröffentlichungstag der Anmeldung: **03.11.2004**
(21) Anmeldenummer: 04005370.4
(22) Anmeldetag: 06.03.2004
(51) Int. Cl.: B29C 45/50, B29C 45/82, B29C 45/68

(54) **Hybrid-Einspritzeinheit und Spritzgiessmaschine mit einer Hybrid-Einspritzeinheit**

(30) Priorität: 26.04.2003 DE 10318958
(71) Anmelder: Krauss-Maffei Kunststofftechnik GmbH, 80997 München (DE)
(72) Erfinder: Wohlrab, Walter, 91781 Weissenburg (DE); Pickel, Herbert, Dr., 93073 Neutraubling (DE)
(74) Vertreter: Wilhelm, Ludwig, Dipl.-Phys.

(57) **Zusammenfassung**

Die Erfindung betrifft eine Hybrid-Einspritzeinheit für eine Spritzgießmaschine sowie eine Spritzgießmaschine mit einer Hybrid-Einspritzeinheit. Die Hybrid-Einspritzeinheit umfasst eine drehbar und axialverschiebbar in einem Plastifizierzylinder (5) aufgenommene Plastifizierschnecke (4), einen ersten Elektromotor (13), der mit einer Welle der Plastifizierschnecke (4) zu deren Drehantrieb gekoppelt ist und einen zweiten Elektromotor (1), der mit der Welle der Plastifizierschnecke (4) zu deren Axialverschiebung gekoppelt ist.

Um den zweiten elektromotor in kostengünstiger Weise auslegen zu können und die Belastung auf die Koppelung zwischen dem zweiten Elektromotor und der Welle der Plastifizierschnecke zu reduzieren wird vorgeschlagen, dass zumindest eine Kolben-Zylinder Einheit (7, 10) vorgesehen ist, die zur Unterstützung des zweiten Elektromotors (1) in Einspritzrichtung mit einer Druckquelle (30, 32) verbindbar ist, sich an einem Ende gegen ein Gehäuse (20) der Hybrid-Einspritzeinheit abstützt oder zumindest teilweise integral mit diesem ausgebildet ist und mit dem anderen Ende über ein Joch (8) auf die Welle der Plastifizierschnecke (4) einwirkt, wobei die Welle der Plastifizierschnecke (4) drehbar im Joch (8) gelagert ist und das Joch (8) zwischen dem Krafteinleitungspunkt des zweiten Elektromotors (1) in die Welle einerseits und der Plastifizierschnecke (4) andererseits auf die Welle wirkt.

## Beschreibung

Die Erfindung betrifft eine Hybrid-Einspritzeinheit sowie eine Spritzgießmaschine mit einer Hybrid-Einspritzeinheit gemäß den Oberbegriffen der Ansprüche 1 bzw. 10.

Spritzgießmaschinen umfassen in der Regel eine sogenannte Schließeinheit und eine Plastifizier- oder Einspritzeinheit. Die Schließeinheit weist in der Regel zumindest zwei Formaufspannplatten auf, an denen Formteile oder Formhälften befestigt sind. Durch Schließen der beiden Formhälften wird eine Kavität gebildet, in die von der Plastifiziereinheit zur Verfügung gestellte Kunststoffschmelze eingebracht wird. Nach dem Erhärten der Schmelze kann die Schließeinheit geöffnet und das Produkt aus der Kavität entnommen werden.

Bei der Plastifiziereinheit wird das Ausgangsmaterial (z.B. Kuststoffgranulat) in der Regel durch Einbringung von Energie (u. a. Scherenergie) in Schmelze umgewandelt, die sich in einem Schneckenvorraum einer Zylinder-Schneckenanordnung sammelt. Die Plastifizierung erfolgt dabei durch Drehen einer Plastifizierschnecke in einem Plastifizierzylinder. Das Einspritzen erfolgt durch Axialverschiebung der Plastifizierschnecke nach vorne, so dass die im Schneckenvorraum aufgenommene Schmelze in die Kavität der in der Schließeinheit aufgenommenen Form gedrückt wird.

Zu den gerade beschriebenen Vorgängen sind in der Regel verschiedene Antriebe notwendig. Die Schließeinheit muss geschlossen und geöffnet werden. Überdies ist beim Einspritzvorgang ein Schließdruck aufzubringen. Die Plastifizierschnecke wird zum Plastifizieren rotatorisch angetrieben. Überdies ist ein Antrieb für die Axialbewegung vorzusehen. Im Stand der Technik sind eine Vielzahl von technischen Lösungen für die verschiedenen Antriebe zu finden. Beispielsweise ist es bekannt, die Schließeinheit hydraulisch zu schließen, zu öffnen und auch den Schließdruck hydraulisch aufzubringen. Auch die Plastifizierschnecke der Plastifziereinheit kann in hydraulischer Weise drehangetrieben bzw. axial verschoben werden. In jüngerer Zeit wurde vielfach auch auf elektrische Antriebe umgestellt, sowohl bei der Schließeinheit (oftmals gekoppelt mit Kniehebelmechanismen) wie auch bei der Plastifiziereinheit zum Antrieb der Plastifizierschnecke. Elektrische Antriebe lassen sich besonders präzise steuern und kontrollieren. Auch sind die Reaktions- und Antwortzeiten relativ schnell. Überdies sind eine Vielzahl von verschiedenen Kombinationen aus hydraulischen und elektrischen Antrieb für die Plastifizierschnecke bekannt.

Momentan geht der Trend immer mehr zur Verwendung von elektrischen Antrieben. In diesem Zusammenhang wird beispielsweise auf die DE 43 44 335 verwiesen, bei der zwei Elektromotoren zum Antrieb der Plastifizierschnecke vorgesehen sind. Beide Elektromotoren haben fest angeordnete Stator-, Rotoranordnungen. Ein erster Elektromotor treibt über eine Spindel-Mutter-Kombination die Plastifizierschnecke in Axialrichtung an. Ein zweiter Elektromotor ist mit seinem Rotor über einen Vielnutenabschnitt mit einer Keilwelle der Plastifizierschnecke in verschieblicher Weise gekoppelt und zum rotatorischen Antreiben der Plastifizierschnecke bestimmt. Beide Elektromotoren können völlig unabhängig voneinander betrieben werden.

Problematisch ist jedoch insbesondere die Kostenentwicklung bei Hochleistungsmotoren. Sind kleinere Elektromotoren, die als Direktantrieb dienen können, noch relativ günstig, so steigen die Kosten für Hoch-Drehmomentmotoren mit zunehmendem Drehmoment überproportional stark an. Das gleiche gilt für Mutter-Spindel-Kombinationen. Auch hier erfolgt ein übermäßig starker Anstieg der Kosten bei größer dimensionierten Einheiten. Insbesondere bei großen Plastifiziereinheiten nehmen die Kosten damit überproportional zu. Auf der anderen Seite bieten elektromotorische Antriebe im Hinblick auf ihre präzise Betreibbarkeit besondere Vorteile.

Aufgabe der vorliegenden Erfindung ist es, eine Einspritzeinheit anzugeben, bei der Kosten gesenkt werden können, ohne dass auf die Vorteile von präzise arbeitenden elektrischen Antriebe verzichtet wird.

Eine Kombination von Hydraulikantrieb und elektrischem Antrieb für die Plastifiziereinheit ist beispielsweise in der EP 0 760 277 sowie in der JP 04189525 zu finden. Aus der EP 0 760 277 geht jedoch nicht hervor, wie der rotatorische Antrieb der Schnecke bei dieser Konstruktion, nämlich mit Zahnstange und Ritzel, erreicht werden soll. Überdies ist die Kraftübertragung über die Zahnstangen-Ritzel-Kombination nur im eingeschränkten Umfang möglich.

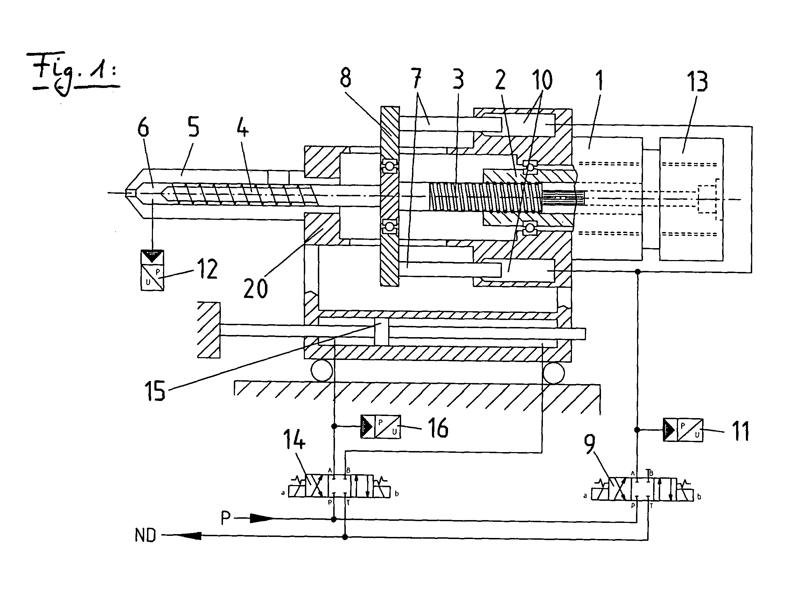

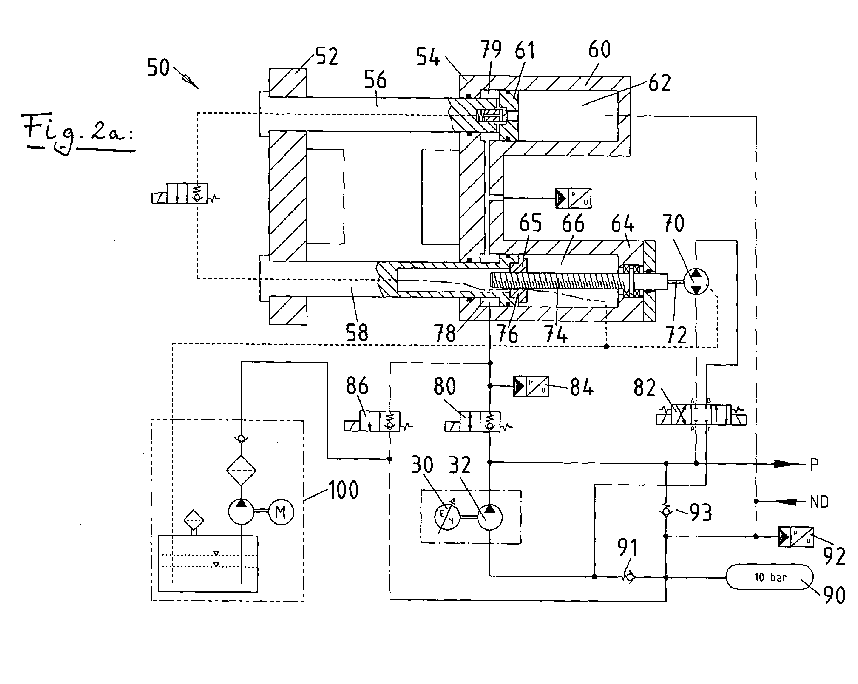

Aus der JP 04189525 geht eine an sich vorteilhafte Kombination von elektromotorischem Antrieb und Hydraulikantrieb hervor. Allerdings haben die Ausführungsformen gemäß den Figuren 1 und 2 den Nachteil, dass der Gesamteinspritzdruck immer noch von der Mutter-Spindel-Kombination aufzunehmen ist. Aus diesem Grund muss auch bei diesen Ausführungsformen die Mutter-Spindel-Kombination entsprechend stark ausgelegt werden.

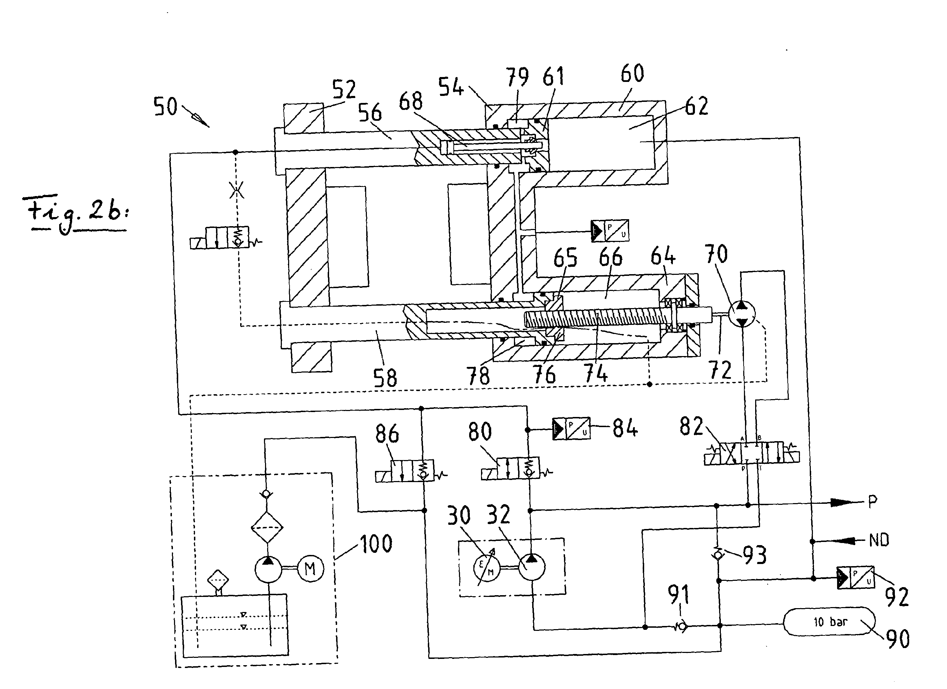

Bei der Ausführungsform gemäß Fig. 3 scheint dies anders zu sein. Hier stützt sich der Hydraulikdruck gegen das Gehäuse ab und die Mutter-Spindel-Kombination muss nicht den gesamten Einspritzdruck aufnehmen. Vielmehr findet eine tatsächliche Überlagerung beider Vorschubkräfte statt.

Die vorliegende Lösung der gestellten Aufgabe stelle eine weitere Ausführungsform einer Hydraulik/Elektromotor-Kombination für den Axialvorschub zur Verfügung. Insbesondere lässt sich die genannte Aufgabe mit den Merkmalen des Anspruchs 1 lösen. Eine besonders vorteilhafte und kostengünstige Möglichkeit zur Lösung der Aufgabe ist im Anspruch 10 angegeben.

Insgesamt liegt der Erfindung mit der Gedanke zugrunde, zunächst einen elektrischen Antrieb zum rotatorischen Antrieb der Plastifiziereinheit zu verwenden und einen weiteren elektrischen Antrieb zum Axialverschub der Plastifiziereinheit vorzusehen. Zusätzlich zum elektrischen Antrieb für den Axialverschub erfolgt eine Kraftunterstützung mittels eines Hydraulikelementes. Im Gegensatz zum Ausführungsbeispiel der Fig. 3 in der JP 04189525 wird vorliegend jedoch eine separat Kolben-Zylindereinheit im Anspruch 1 vorgesehen, die über ein Joch auf die Welle der Plastifizierschnecke einwirkt. Dabei muss die Welle der Plastifizierschnecke natürlich drehbar im Joch gelagert sein und zwischen dem Krafteinleitungspunkt des zweiten Elektromotors einerseits und der Plastifizierschnecke andererseits angeordnet sein. Das letzte Merkmal gewährleistet, dass die Koppelung des zweiten Elektromotors sowie der Elektromotor selbst nicht mit der gesamten Einspritzkraft belastet wird, sondern lediglich mit der vom Elektromotor aufgebrachten Kraft. Die Verwendung eines Jochs lässt den Einsatz von mehreren Kolben-Zylindereinheiten zu, die alle am Joch angreifen können. Beispielsweise können zwei gegenüberliegend angeordnete Kolben-Zylindereinheiten verwendet sein. Dabei ist ein Rückgriff auf handelsübliche Hydraulikzylinder ohne weiteres möglich. Mit einer solchen Konstruktion können insbesondere Dichtprobleme innerhalb der Plastifiziereinheit vermieden werden, die beispielsweise durch den Einsatz einer Konstruktion, wie bei der JP 04189525 dargestellt, auftreten können.

Ein weiterer besonders wesentlicher Gedanke der vorliegenden Erfindung, der ebenfalls signifikant zu Kostenreduktion beiträgt, ist die Verwendung einer Druckquelle für die hydraulische Kraftunterstützung bei der Plastifiziereinheit, die gleichzeitig auch bei der Schließeinheit verwendet wird. Dabei an eine Verwendung zum Öffnen und Schließen der Schließeinheit und/oder zum Aufbau des Schließdrucks bei der Schließeinheit gedacht. Die Grundüberlegung, welche den Einsatz einer einzigen Druckmittelquelle für verschiedene Einsatzbereiche ermöglicht, ist der unterschiedliche Verwendungszeitpunkt der Druckmittelquelle für den jeweiligen Anwendungsbereich. Beispielsweise muss weder ein Schließdruck aufgebaut werden noch ein Einspritzvorgang erfolgen, wenn die Aufspannplatten der Schließeinheit geschlossen oder geöffnet werden. Unmittelbar nach dem Schließen der Schließeinheit findet dann das Aufbringen des Schließdrucks statt, der dann mittels eines Schaltventils ohne weiteren Betrieb der Druckmittelquelle aufrecht erhalten werden kann. Zum Zeitpunkt des Einspritzvorgangs wiederum muss auf der Schließseite keine Druckmittelquelle unmittelbar aktiv sein, d. h. die dort vorgesehene Druckmittelquelle kann zu diesem Zeitpunkt zur Unterstützung der Plastifiziereinheit verwendet werden.

Eine überaus vorteilhafte Ausführungsform ist dadurch gekennzeichnet, wenn die Druckquelle aus einer Kombination einer Pumpe mit einem drehzahlgeregelten Motor besteht, der die Pumpe antreibt. In diesem Fall kann der Öldruck bzw. das Ölvolumen in hervorragender Weise dosiert werden, so dass für jeden Anwendungsbereich, nämlich Schließen der Schließeinheit, Aufbringen des Schließdrucks und Unterstützen der Plastifiziereinheit, eine genaue Steuerung/Regelung des Öldrucks bzw. Fördervolumens vorgenommen werden kann.

Verwendet man einen Hydromotor zusammen mit einer Mutter-Spindel-Kombination zum Schließen und Öffnen der Schließeinheit, so lässt sich die Schließeinheit auch ohne große Ölmenge betreiben. Mit einer relativ leistungsschwachen Elektromotor-Pumpeneinheit kann dann auch eine große Spritzgießmaschine in Kombination mit Elektromotoren für den Dreh- und Axialantrieb der Plastifizierschnecke aufgebaut werden. Damit können auch bei großen Spritzgieß-Einheiten kostengünstige Bauteile verwendet werden, ohne dass qualitativ eine Minderung hingenommen werden müsste.

Vorteilhafte Ausführungsformen sind den Unteransprüchen definiert.

Die Erfindung wird nachfolgend anhand eines einzigen Ausführungsbeispiels und mit Bezug auf die beigefügten Zeichnungen näher erläutert. Die Zeichnungen zeigen in:
- Fig. 1: eine schematische Darstellung einer erfindungsgemäßen Hybrid-Einspritzeinheit,
- Fig. 2a: eine schematische Darstellung einer ersten Ausführungsform einer Schließeinheit mit Druckmittelquelle und
- Fig. 2b: eine schematische Darstellung einer zweiten Ausführungsform einer Schließeinheit mit Druckmittelquelle.

Beim vorliegenden Ausführungsbeispiel ist in den zusammengefügten Figuren 1 und 2 in schematischer Darstellung eine Gesamtmaschine angegeben, wie sie in sehr kostengünstiger und vorteilhafter Weise aufgebaut sein kann.

Die vorliegende Ausführungsform der Spritzgießmaschine besteht aus einer Plastifiziereinheit, die in Fig. 1 erläutert ist. Die Schließseite der Spritzgießmaschine ist in den Fig. 2a und 2b dargestellt. Dabei sind die Hydraulikleitungen an den Punkten P und ND miteinander zu verbinden.

Die Plastifiziereinrichtung umfasst ein Gehäuse 20, an dem sich in Fig. 1 nach links ein Plastifizierzylinder 5 mit einer darin angeordneten Plastifizierschnecke 4 dargestellt. Das Gehäuse ist, wie durch die unten schematisch dargestellten Rollen angedeutet, nach links und rechts verschiebbar. Dies wird später noch genauer erläutert.

Die Plastifizierschnecke 4 wird rotatorisch und in Axialrichtung angetrieben und verarbeitet Kunststoffgranulat zu einer Kunststoffschmelze, welche sich im Schneckenvorraum 6 vor jedem Einspritzvorgang sammelt. Der Druck im Schneckenvorraum 6 wird von einem Druckaufnehmer 12 ermittelt und an eine nicht dargestellte Steuereinrichtung weiter gegeben.

Die Plastifizierschnecke 4 geht an ihrem hinteren Ende in eine Welle über, welche sich durch das Gehäuse 20 hindurch erstreckt. Am Ende des Gehäuses 20 ist eine Kombination aus zwei Elektromotoren angeordnet, nämlich einem ersten Elektromotor 13, dessen Rotor mit einer zylindrischen Buchse verbunden ist, die - in Fig. 1 - nach links vorspringt und an ihrem vorderen Ende eine Vielnutbohrung aufweist. In dieser Vielnutbohrung ist ein Keilzapfen am hinteren Ende der Welle der Plastifizierschnecke 4 aufgenommen. Der Keilzapfen ist in der Vielnutbohrung axial beweglich gehalten, so dass sich die Plastifizierschnecke gegenüber dem ersten elektrischen Antrieb 13 in Axialrichtung bewegen lässt. Jedoch sind der Rotor des ersten Elektromotors 13 und die Welle der Plastifizierschnecke 4 drehfest miteinander verbunden, so dass ein Drehantrieb der Plastifizierschnecke mittels des ersten Elektromotors 13 möglich ist.

Unmittelbar am Gehäuse 20 angeordnet ist ein zweiter Elektromotor 1, der einen Hohlwellenrotor besitzt. In die Ausnehmung des Hohlwellenrotors ragt die vorgenannt beschriebene vorspringende Buchse des ersten Elektromotors 13 hinein. Der Hohlwellenrotor des zweiten Elektromotors 1 besitzt eine in das Gehäuse 20 hineinragende Spindelmutter 2, die über Kugeln mit einem als Spindel ausgebildeten Abschnitt der Welle der Plastifizierschnecke 4 zusammenwirkt. Insgesamt ergibt dieser Abschnitt der Welle zusammen mit den Kugeln und der Spindelmutter 2 einen Kugelrollenspindeltrieb. Die Spindelmutter 2 ist im Gehäuse 20 gelagert.

Durch den Betrieb des elektrischen Motors 1 wird die Plastifizierschnecke 4 über das Zusammenwirken von Spindelmutter 2 und Spindel in Axialrichtung nach vorne (Einspritzbewegung) oder hinten verschoben. Radial außerhalb der Spindel-Mutter-Anordnung sind im Gehäuse 20 integriert zwei Hydraulikzylinder angeordnet, in denen jeweils Kolbeneinheiten 7 aufgenommen sind. Die Kolbeneinheiten 7 erstrecken sich nach vorn bis zu einem Joch 8, welches über eine Lagerung mit der Welle der Plastifizierschnecke 4 verbunden ist.

Überdies ist im Gehäuse 20 (unten) ein doppelt wirkender Kolben 15 in einem weiteren Hydraulikzylinder angeordnet, durch dessen Betrieb die gesamte Einspritzeinrichtung in Axialrichtung bewegt werden kann.

Die Zylinder-Kolben-Kombinationen 7 weisen jeweils einen Druckraum 10 auf, der über Hydraulikleitungen mit Hydrauliköl versorgbar ist. Die Hydraulikleitung kann mittels eines Umschaltventils 9 mit einer - später noch genauer zu erläuternden-Druckmittelquelle oder - in umgeschaltetem Zustand - mit einem Niederdruckspeicher verbunden werden.

Ein weiteres Umschaltventil 14 erlaubt den Betrieb des Doppelkolbens 15 je noch Verbinden der beiden Druckräume mit der Druckquelle in zwei Richtungen, also nach vorne oder nach hinten. Dabei wird die gesamte Einspritzeinheit entweder zur Schließeinheit hin oder von dieser weg bewegt. Um den gesamten Ablauf kontrollieren zu können, sind überdies Druckaufnehmer 11 und 16 an den Hydraulikleitungen angeordnet, die mit einer nicht dargestellten Steuerung verbunden sind.

Als nächstes wird auf den Aufbau der Schließeinheit in Fig. 2a eingegangen. Die Schließeinheit, nachfolgend lediglich stark schematisch dargestellt, umfasst zwei zueinander verschiebbare Aufspannplatten 52 und 54, an den Werkzeughälften zueinander zeigend angeordnet sind. In Fig. 2 ist die Schließeinheit in geöffnetem Zustand dargestellt. Die beiden Aufspannplatten 52 und 54 sind über je zwei Holme 56 und 58 verbunden, wobei in Fig. 2 nur jeweils zwei Holme, nämlich ein oberer Holm 56 und ein unterer Holm 58 zu sehen sind. Die Holme sind gewöhnlich jeweils diagonal gegenüberliegend ausgebildet, durchsetzen die Aufspannplatte 52 und stützen diese an einer Auflage ab. In der Aufspannplatte 54 sind die vier Holme verschieblich gelagert. Integral in der Aufspannplatte sind Hydraulikzylinder 60 und 64 ausgebildet. Der in Fig. 2 obere Hydraulikzylinder 60 nimmt einen als Endseite des Holmes ausgebildeten Kolben auf, der als doppelt wirkender Kolben ausgebildet ist. Ebenso weist der untere Holm 58 einen doppelt wirkenden Kolben 65 auf, der jedoch gleichzeitig als Mutter (hier separates Bezugszeichen 76) für eine Mutter-Spindel-Kombination dient. Die Spindel für den in Fig. 2 unteren Holm ist im Hydraulikzylinder 64 koaxial gelagert und wird über eine Welle 72 von einem Hydraulikmotor 70 angetrieben.

Durch den Betrieb des Hydraulikmotors 70 und dem rotatorischen Antreiben der Spindeln 74 über die Welle 72 können die beiden Aufspannplatten 52 und 54 aufeinander zu bzw. voneinander weg verfahren werden.

Der Hydraulikmotor 70 ist über Hydraulikleitungen und ein Umschaltventil nach Art eines 4/3-Ventils mit einer Druckmittelquelle zu verbinden. Die Druckmittelquelle ist über ein Schaltventil 80 ebenfalls mit einem Druckraum 78 des Hydraulikkolbens 64 verbindbar. Gleichzeitig wird damit der obere Druckraum 79 für den Hydraulikkolben 60 beaufschlagt. Die Druckräume 78 und 79 sind überdies über ein Schaltventil 86 mit einem Niederdruckspeicher 90 verbindbar, der über eine sekundäre Druckerzeugungseinheit 100 gespeist wird. Die sekundäre Druckerzeugungseinrichtung 100 umfasst neben einem Hydraulikreservoir eine Motor-Pumpen-Kombination mit geringer Leistung.

Ein wichtiger Teil der vorliegenden Ausführungsform besteht aus der Druckmittelquelle in Form einer Pumpe 32 und einem drehzahlgesteuerten Elektromotor 30, der die Pumpe 32 antreibt. Durch den entsprechenden Betrieb des Elektromotors kann die Förderleistung der Pumpe 32 genau bestimmt werden.

Die alternative Schließeinheit der Fig. 2b ist nur geringfügig abgeändert. Insbesondere bezeichnen gleiche Bezugszahlen gleiche Teile. Bei der Ausführungsform gemäß Fig. 2b ist lediglich im oberen Holm ein Druckübersetzer 68 integriert, der - wie in der Ausführungsform der Fig. 2a der Druckraum 78 der Verfahrbewegung der beweglichen Platte dient.

Im Folgenden wird die Wirkungsweise der sowohl der Schließeinheit wie auch der Plastifiziereinheit näher erläutert.

Soll die Schließeinheit 50 von ihrem in Fig. 2a (Fig. 2b) dargestellten, geöffneten Zustand in die Schließstellung verfahren werden, so wird der drehzahlgesteuerte Elektromotor 30 entsprechend betrieben und durch geeignetes Umschalten des 4/3-Ventils 82 wird der Hydromotor 70 zur Rotation der Spindel 74 betrieben. Durch Zusammenwirken der Spindel 74 mit der Spindelmutter 76 werden die beiden Aufspannplatten 52 und 54 aufeinander zu verfahren.

Liegen die beiden Werkzeughälften aufeinander, so muss der Schließdruck aufgebracht werden. Zu diesem Zweck werden die Druckräume 78 und 79 durch entsprechendes Schalten des Schaltventils 80 unter gleichzeitigem Betrieb des Elektromotors 30 beaufschlagt, so dass die beiden doppelt wirkenden Kolben 61 und 65 (in Fig. 2a) nach rechts gedrückt werden. Ist der Schließdruck dann aufgebracht, sperrt das Schaltventil 80. Die Schließeinheit weißt noch weitergehende Funktionalitäten bezüglich ihres Betriebes auf, auf die vorliegend jedoch nicht näher eingegangen wird.

Während des Schließvorgangs des Schließeinheit konnte auf der Plastifizierseite der Schneckenvorraum 6 durch rotatorischen Antrieb der Plastifizierschnecke mittels des elektrischen Motors 13 mit Schmelze gefüllt werden. Gleichzeitig mit dem Füllen des Schneckenvorraums 6 mit Schmelze wird die Plastifizierschnecke 4 nach hinten gedrückt. Dabei ist der Elektromotor 1 wirkungslos geschaltet, so dass die axiale Rückwärtsbewegung der Plastifizierschnecke 4 nicht gehindert wird. Evtl. kann sogar eine Unterstützung der Rückwärtsbewegung mittels des Elektromotors 1 vorgenommen werden.

Soll die Kunststoffschmelze im Schneckenvorraum eingespritzt werden, so wird die Einspritzvorrichtung zunächst an die Schließeinheit heran gefahren. Dazu wird der in Fig. 1 linke Druckraum des Doppelkolbens 15 durch entsprechende Schaltung des Ventils 14 und Betrieb des Elektromotors 30 mit Druck beaufschlagt, so dass das bewegliche Gehäuse 20 in Richtung Schließeinheit verschoben wird und dort mit der Düsenspitze des Plastifizierzylinders 5 ankoppelt. Ist diese Stellung des Gehäuses 20 erreicht, so schließt das Ventil 14 und der tatsächliche Einspritzvorgang beginnt.

Während des Einspritzvorgangs wird der Elektromotor 1 zum axialen Vorschub der Plastifizierschnecke 4 betrieben. Gleichzeitig werden durch entsprechendes Schalten des Ventils 9 die Druckräume 10 der im Gehäuse 20 integrierten Kolben-Zylinder-Anordnungen mit Druck versorgt, so dass die Kolben 7 in unterstützender Weise nach vorne gedrückt werden und über das Joch 8 auf die Welle der Plastifizierschnecke 8 einwirken. Dabei erfolgt eine Addition der Kräfte aus den Kolben-Zylinder-Kombinationen mit der von Elektromotor 1 übertragenen Kraft. Gleichzeitig kann jedoch die Verfahrgenauigkeit aufrecht erhalten werden, da eine Regelung des Elektromotors 1 in bisheriger Weise möglich ist. Es ist sogar möglich, mit dem Elektromotor 1 eine zu der hydraulischen Kraft entgegenwirkenden Kraft zu erzeugen. Der rotatorische Freiheitsgrad der Welle der Plastifizierschnecke 4 gegenüber dem Joch ist durch die vorhandene Lagerung gegeben.

Nach dem Einspritzvorgang wird die Plastifiziereinrichtung durch Befüllen des rechten Druckraums und entsprechend der Beaufschlagung des Doppelkolbens 15 bei entsprechender Schaltung des Ventils 14 zurück verschoben. Gleichzeitig kann bereits in diesem Zustand wieder Schmelze für den Schneckenvorraum 6 produziert werden. Dabei wird die Plastifizierschnecke wieder zurückgeschoben. Das Hydrauliköl aus den Druckbereichen 10 kann dabei wieder durch entsprechende Schaltung des Ventils 9 in den Niederdruckspeicher 90 zurück geführt werden. Auch hier kann der Elektromotor 1 in unterstützender Weise tätig sein, um die Druckverhältnisse im Schneckenvorraum in geeigneter Weise zu regeln.

Gleichzeitig zum Zurückfahren der Plastifiziereinrichtung wird nach einer entsprechenden Abkühlphase der Schließdruck in den Druckräumen 78 und 79 der Schließeinheit 50 durch Schalten des Ventils 86 gelöst und die beiden Aufspannplatten 52 und 54 durch umgekehrten Betrieb der Spindel 74 mittels des Hydromotors 70 bei entsprechender Schaltung des Ventils 82 aufgefahren.

Wie vorgenannt geschildert, ist die aus Pumpe 32 und drehzahlgeregeltem Elektromotor 30 bestehende Druckmittelquelle zentraler Bestandteil der vorliegenden Konstruktion und nahezu bei jedem Arbeitsschritt involviert, nämlich beim Schließen und Öffnen der Schließeinheit, beim Aufbringen des Schließdrucks, beim Verfahren der Plastifiziereinheit und beim Einspritzvorgang selbst.

Durch die vorgestellte Konstruktion können bei einer vorgegebenen Maschinengröße schwächer ausgelegte Bauteile, was die Spindel-Mutter-Kombination 2, 3 und den Elektromotor 1 betrifft, ausgewählt werden. Überdies lässt sich die aus Pumpe 32 und Elektromotor 30 bestehende Druckmittelquelle gut auslasten. Mittels des drehzahlgesteuerten Elektromotors 30 ist zudem noch eine besonders genaue Druckund Volumenregelung möglich. Nicht zuletzt kann durch die Steuergenauigkeit der Elektromotoren 1 und 13 noch ein hochpräziser Betrieb der Plastifiziereinheit trotz Hydraulikunterstützung gewährleistet werden.

### Bezugszeichenliste

- 1: Elektrischer High-Torque Motor
- 2: Spindelmutter
- 3: Spindel
- 4: Plastifizierschnecke
- 5: Plastifizierzylinder
- 6: Schneckenvorraum
- 7: Hydraulikkolben
- 8: Joch
- 9: Drosselbares Schaltventil
- 10: Hydraulikzylinder
- 11: Druckaufnehmer
- 12: Druckaufnehmer
- 13: Elektrischer Drehantrieb
- 14: Umschaltventil
- 15: Fahrzylinder
- 16: Druckaufnehmer

- 30: Drehzahlregelbarer Elektromotor
- 32: Pumpe

- 50: Schließeinheit
- 52: Bewegliche Aufspannplatte
- 54: Feste Aufspannplatte
- 56: Oberer Holm
- 58: Unterer Holm
- 60: Obere Hydraulikzylinder
- 61: Kolben des oberen Holmes
- 62: Druckraum des oberen Hydraulikzylinders
- 64: Unterer Hydraulikzylinder
- 65: Kolben des unteren Holmes
- 66: Druckraum des unteren Hydraulikzylinders
- 68: Druckübersetzer
- 70: Hydromotor
- 72: Antriebswelle
- 74: Spindel
- 76: Spindelmutter
- 78: Druckraum
- 79: Druckraum
- 80: Drosselbares Schaltventil für Schließdruckaufbau
- 82: Drosselbares Schaltventil für den Hydromotor
- 84: Druckaufnehmer
- 86: Schaltventil

- 90: Niederdruckspeicher
- 91: Rückschlagventil
- 92: Druckaufnehmer
- 93: Rückschlagventil

- 100: Druckeinheit für Niederdruckspeicher

- P: Verbindungspunkt von Hydraulikleitungen
- ND: Verbindungspunkt von Hydraulikleitungen

## Patentansprüche

1. Hybrid-Einspritzeinheit für eine Spritzgießmaschine, umfassend
- eine drehbar und axialverschiebbar in einem Plastifizierzylinder (5) aufgenommene Plastifizierschnecke (4),
- einen ersten Elektromotor (13), der mit einer Welle der Plastifizierschnecke (4) zu deren Drehantrieb gekoppelt ist und
- einen zweiten Elektromotor (1), der mit der Welle der Plastifizierschnecke (4) zu deren Axialverschiebung gekoppelt ist,
**dadurch gekennzeichnet,**
**dass** zumindest eine Kolben-Zylinder Einheit (7,10) vorgesehen ist, die
- zur Unterstützung des zweiten Elektromotors (1) in Einspritzrichtung mit einer Druckquelle (30, 32) verbindbar ist,
- sich an einem Ende gegen ein Gehäuse (20) der Hybrid-Einspritzeinheit abstützt oder zumindest teilweise integral mit diesem ausgebildet ist und
- mit dem anderen Ende über ein Joch (8) auf die Welle der Plastifizierschnecke (4) einwirkt, wobei
-- die Welle der Plastifizierschnecke (4) drehbar im Joch (8) gelagert ist und
-- das Joch (8) zwischen dem Krafteinleitungspunkt des zweiten Elektromotors (1) in die Welle einerseits und der Plastifizierschnecke (4) andererseits auf die Welle wirkt.

2. Hybrid-Einspritzeinheit nach Anspruch 1,
**dadurch gekennzeichnet,**
**dass** der erste Elektromotor (13) zum Drehen der Plastifizierschnecke (4) als Direktmotor ausgebildet ist, wobei der Rotor drehfest mit der Welle der Plastifizierschnecke (4) verbunden ist.

3. Hybrid-Einspritzeinheit nach Anspruch 2
**dadurch gekennzeichnet,**
**dass** der Rotor axialverschieblich mit der Welle der Plastifizierschnecke verbunden ist.

4. Hybrid-Einspritzeinheit nach einem der vorhergehenden Ansprüche,
**dadurch gekennzeichnet,**
**dass** zur Axialverschiebung der Plastifizierschnecke (4) durch den zweiten Elektromotor (1) eine Mutter-Spindel-Kombination vorgesehen ist, wobei
- ein Abschnitt der Welle der Plastifizierschnecke (4) als Spindel (3) ausgebildet ist und
- eine mit der Spindel (3) zusammenwirkende Spindelmutter (2) direkt vom Rotor des zweiten Elektromotors (1) angetrieben ist.

5. Hybrid-Einspritzeinheit nach Anspruch 4,
**dadurch gekennzeichnet,**
**dass** die Mutter-Spindel-Kombination als Planetenrollentrieb ausgebildet ist.

6. Hybrid-Einspritzeinheit nach einem der vorhergehenden Ansprüche,
**dadurch gekennzeichnet,**
**dass** die zumindest eine Kolben-Zylinder Einheit (7, 10) im wesentlichen parallel zur Spindel-Mutter Kombination (2, 3) angeordnet ist.

7. Hybrid-Einspritzeinheit nach einem der vorhergehenden Ansprüche,
**dadurch gekennzeichnet,**
**dass** zwei oder mehrere Kolben-Zylinder Einheiten (7, 10) vorgesehen sind, die jeweils auf das gleiche Joch (8) einwirken.

8. Hybrid-Einspritzeinheit nach einem der vorhergehenden Ansprüche,
**dadurch gekennzeichnet,**
**dass** als Druckquelle eine Pumpe (32) vorgesehen ist, die von einem drehzahlgeregeltem elektrischen Motor (30) angetrieben ist.

9. Hybrid-Einspritzeinheit nach einem der vorhergehenden Ansprüche,
**dadurch gekennzeichnet,**
**dass** eine in zwei Richtungen wirksame Doppelkolben-Zylinder-Einheit (14) vorgesehen ist, die mit einer Druckquelle zum Verschieben der gesamten Einspritzeinheit in Axialrichtung der Plastifizierschnecke (4) vorgesehen ist.

10. Spritzgießmaschine mit
einer Hybrid-Einspritzeinheit, umfassend
- eine drehbar und axialverschiebbar in einem Plastifizierzylinder (5) aufgenommene Plastifizierschnecke (4),
- einen ersten Elektromotor (13) zum Drehantrieb der Plastifizierschnecke (4),
- einen zweiten Elektromotor (1) zum Antrieb der Plasifizierschnecke (4) in deren Axialrichtung,
- zumindest eine hydraulische Kolben-Zylinder Einheit (7,10) zur steuerbaren Druckbeaufschlagung der Plastifizierschnecke (4) in Einspritzrichtung, und
einer Formschließeinheit (50) mit zumindest zwei relativ zueinander bewegbaren Formaufspannplatten (52, 54),
**dadurch gekennzeichnet,**
**dass** die zumindest eine Kolben-Zylinder Einheit (7,10) mit einer aus einer Pumpe und einem drehzahlgeregelten elektrischen Motor umfassenden Druckquelle verbindbar ist, die zusätzlich als Druckquelle für die Schließeinheit der Spritzgießmaschine verwendet ist.

11. Spritzgießmaschine nach Anspruch 9,
**dadurch gekennzeichnet,**
**dass** die vom drehzahlgeregeltem elektrischen Motor betriebene Pumpe mit zumindest einer Kolben-Zylinder Einheit (61, 62; 64, 65) zum Aufbau des Schließdruckes für die Schließeinheit (50) verbunden ist.

12. Spritzgießmaschine nach einem der Ansprüche 8 oder 9,
**dadurch gekennzeichnet,**
**dass** zum Öffnen und Schließen der Schließeinheit (50) eine Spindel-Mutter Kombination (74, 76) vorgesehen ist, welche mittels eines Hydromotors (70) betreibbar ist, der wiederum mit der Pumpe (32) zum rotatorischen Antrieb der Spindel (74) oder der Mutter (76) in beide Drehrichtungen verbindbar ist.

13. Spritzgießmaschine nach einem der Ansprüche 9 bis 11,
**dadurch gekennzeichnet,**
**dass** der erste Elektromotor (13) zum Drehen der Plastifizierschnecke (4) als Direktmotor ausgebildet ist, wobei der Rotor drehfest mit der Welle der Plastifizierschnecke (4) verbunden ist.

14. Spritzgießmaschine nach Anspruch 12,
**dadurch gekennzeichnet,**
**dass** der Rotor axialverschieblich mit der Welle der Plastifizierschnecke verbunden ist.

15. Spritzgießmaschine nach einem der vorhergehenden Ansprüche 9 bis 13,
**dadurch gekennzeichnet,**
**dass** zur Axialverschiebung der Plastifizierschnecke (4) durch den zweiten Elektromotor (1) eine Mutter-Spindel-Kombination vorgesehen ist, wobei
- ein Abschnitt der Welle der Plastifizierschnecke (4) als Spindel (3) ausgebildet ist und
- eine mit der Spindel (3) zusammenwirkende Spindelmutter (2) direkt vom Rotor des zweiten Elektromotors (1) angetrieben ist.

16. Spritzgießmaschine nach Anspruch 14,
**dadurch gekennzeichnet,**
**dass** die Mutter-Spindel-Kombination als Kugel-Spindeltrieb ausgebildet ist.

17. Spritzgießmaschine nach einem der vorhergehenden Ansprüche 9 bis 14,
**dadurch gekennzeichnet,**
**dass** die zumindest eine Kolben-Zylinder Einheit (7, 10) im wesentlichen parallel zur Spindel-Mutter Kombination (2, 3) angeordnet ist.

18. Spritzgießmaschine nach einem der vorhergehenden Ansprüche 9 bis 16,
**dadurch gekennzeichnet,**
**dass** zwei oder mehrere Kolben-Zylinder Einheiten (7,10) vorgesehen sind, die jeweils auf das gleiche Joch (8) einwirken.

19. Spritzgießmaschine nach einem der vorhergehenden Ansprüche 9 bis 17,
**dadurch gekennzeichnet,**
**dass** als Druckquelle eine Pumpe (32) vorgesehen ist, die von einem drehzahlgeregeltem elektrischen Motor (30) angetrieben ist.
